# FASCICULE DE BREVET EUROPEEN

(11) **EP 3 323 676 B1**
(45) Date de publication et mention de la délivrance du brevet: **26.02.2020**
(21) Numéro de dépôt: 17199391.8
(22) Date de dépôt: 31.10.2017
(51) Int. Cl.: B60P 7/08

(54) **AGENCEMENT D'ARRIMAGE D'OBJETS SUR UNE SURFACE, NOTAMMENT D'UN PLANCHER DE CHARGEMENT D'UN VEHICULE DE TRANSPORT DE CARGAISONS**
FESTZURR-ANORDNUNG FÜR GEGENSTÄNDE AUF EINER OBERFLÄCHE, INSBESONDERE EINEM LADEBODEN EINES TRANSPORTFAHRZEUGS FÜR FRACHT
ARRANGEMENT FOR SECURING OBJECTS ON A SURFACE, IN PARTICULAR A LOADING FLOOR OF A CARGO TRANSPORT VEHICLE

(30) Priorité: 16.11.2016 FR 1661106
(43) Date de publication de la demande: 23.05.2018
(73) Titulaire: Pommier, 95310 Saint Ouen l'Aumone (FR)
(72) Inventeur: CAUIBEL, Laurent, 95270 LUZARCHES (FR)
(74) Mandataire: Berger, Helmut

(56) Documents cités:
- EP-A1- 3 059 119
- DE-U1-202006 007 916
- FR-A1- 2 782 040

## Description

L'invention concerne un agencement d'arrimage d'objets sur une surface notamment d'un plancher de chargement d'un véhicule de transport de cargaisons, du type décrit dans le préambule de la revendication 1.

Il est connu de doter des véhicules de transport de cargaison de différents points d'arrimage qui sont généralement situés dans le plancher ou sur les longerons du véhicule et situés sur le bord de rive de celui-ci. Ils sont conçus pour permettre la mise en place de la charge sans perturbation et restent accessibles, en nombre suffisant, pour procéder à l'arrimage de cette charge en vue d'un transport, sans risque de perte et affleurant au plancher pour éviter tout risque d'accident pour les personnes se déplaçant sur ce plancher.

Les agencements d'arrimage qui sont connus tels que celui décrit dans le document FR 2 782 040, présentent l'inconvénient majeur de ne pas permettre de maintenir l'anneau d'arrimage dans une position permettant la mise en place des moyens d'arrimage tel que crochets, chaînes ou sangles d'arrimage. Généralement, l'opérateur doit tenir d'une main l'anneau pour mettre en place le moyen d'arrimage sur celui-ci.

L'invention a pour but de pallier ces inconvénients.

Pour atteindre ce but, l'agencement d'arrimage selon l'invention comporte les caractéristiques qui sont énoncées dans la partie caractérisante de la revendication 1.

D'autres caractéristiques avantageuses de l'invention sont décrites dans les revendications dépendantes.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une vue en perspective de l'agencement d'arrimage selon l'invention montrant celui-ci dans une position d'arrimage d'un objet sur un plancher de chargement ;
- la figure 2 est une vue en perspective montrant l'agencement d'arrimage dans sa position escamotée de son anneau d'arrimage ;
- la figure 3 est une vue en perspective du support de l'anneau d'arrimage, de l'agencement d'arrimage selon l'invention ;
- la figure 4 est une vue en perspective d'un anneau d'arrimage selon l'invention ;
- la figure 5 est une vue en perspective à plus grande échelle de l'agencement d'arrimage de la figure 1 ;
- les figures 6 à 8 sont des vues en coupe le long de la ligne VI-VI de la figure 5 et montrent l'anneau d'arrimage dans trois positions différentes dans son support ;
- la figure 9 est une vue en perspective de l'agencement d'arrimage selon l'invention ;
- la figure 10 est une vue latérale de l'agencement d'arrimage selon la figure 9 ;
- les figures 11 et 12 sont des vues latérales montrant l'anneau d'arrimage dans deux positions escamotées de repos ;
- la figure 13A à 13C illustrent la cinématique de l'anneau d'arrimage dans son support et la structure porteuse, en montrant l'anneau dans deux positions de travail et une position escamotée de repos ;
- la figure 14 est une vue en perspective de l'agencement d'arrimage selon l'invention montée sur un longeron en forme d'IPN.

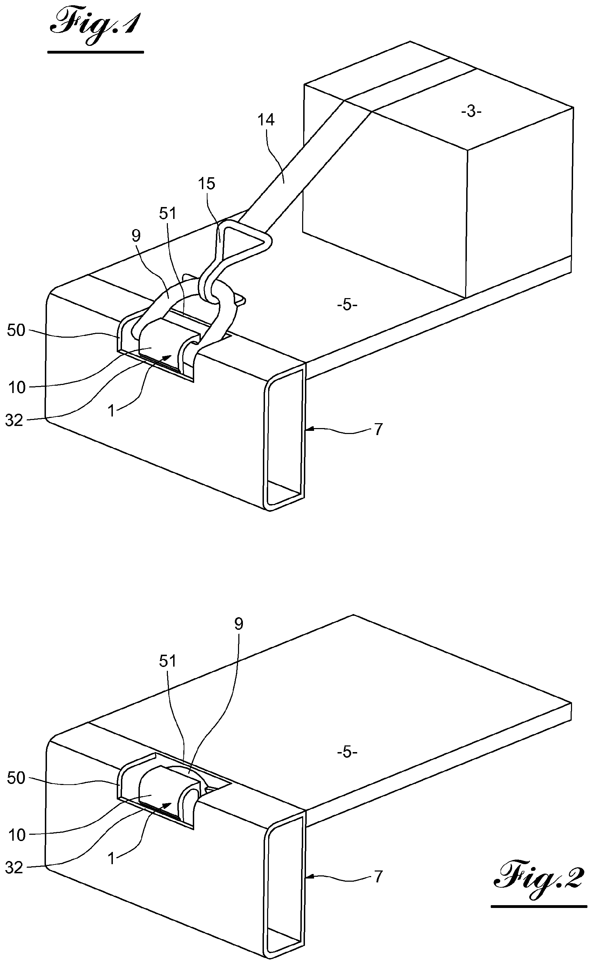

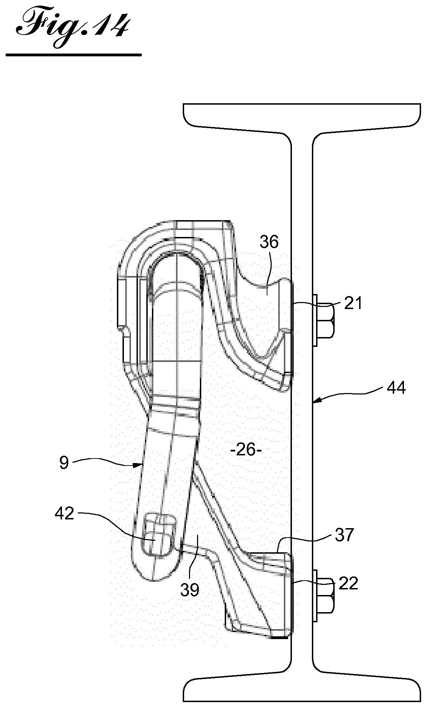

Comme le montrent, de façon générale, les figures 1 et 2, les agencements d'arrimage dont un est illustré en 1 sur les figures, sont destinés à arrimer des objets 3 sur une surface de chargement 5, notamment d'un plancher de chargement d'un véhicule de transport de cargaisons. L'agencement d'arrimage 1 est monté dans une structure porteuse 7 qui, sur les figures 1 et 2 est un châssis qui pourrait s'étendre le long d'un bord latéral du plancher de chargement, c'est-à-dire le bord de rive du véhicule. La structure porteuse pourrait aussi être de tout autre nature appropriée, telle qu'un longeron en forme d'IPN, comme le montre la figure 14.

L'agencement d'arrimage selon l'invention comprend un anneau d'arrimage 9 et un support d'anneau 10 qui est monté dans le châssis. La figure 1 montre l'agencement d'arrimage dans sa position de travail, c'est-à-dire d'arrimage d'un objet 3 sur la surface du plancher 5 à l'aide d'une sangle 14 au moyen d'un crochet 15. La figure 2 montre l'agencement 1 dans sa position escamotée dans le châssis 7 en affleurement de la surface de plancher 5 de chargement.

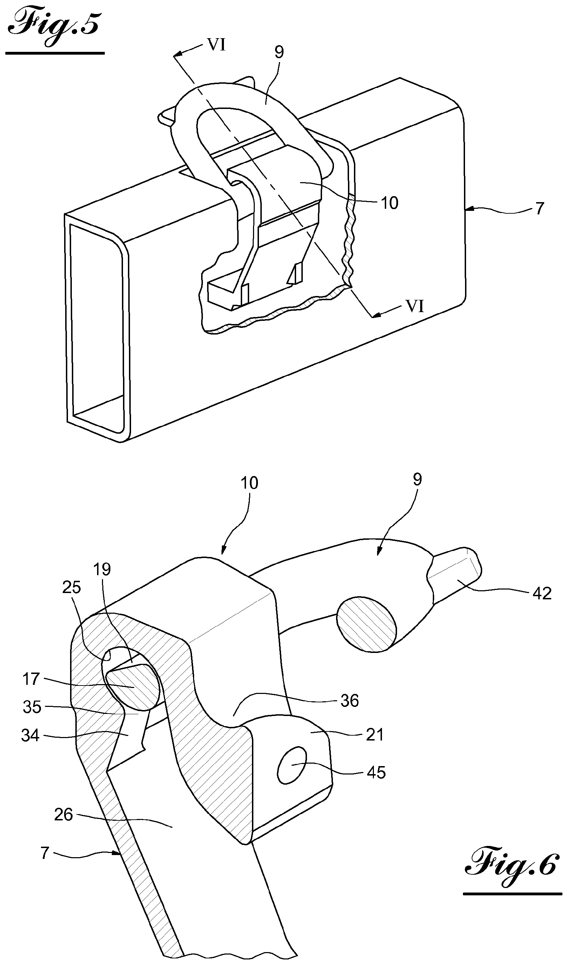

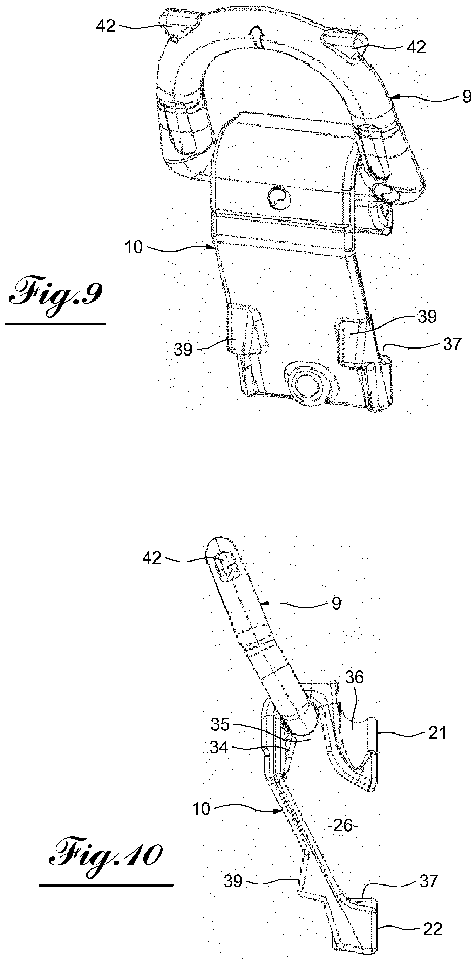

On décrira ci-après la structure de l'agencement d'arrimage 1 plus en détails, en se référant aux figures 2 à 14.

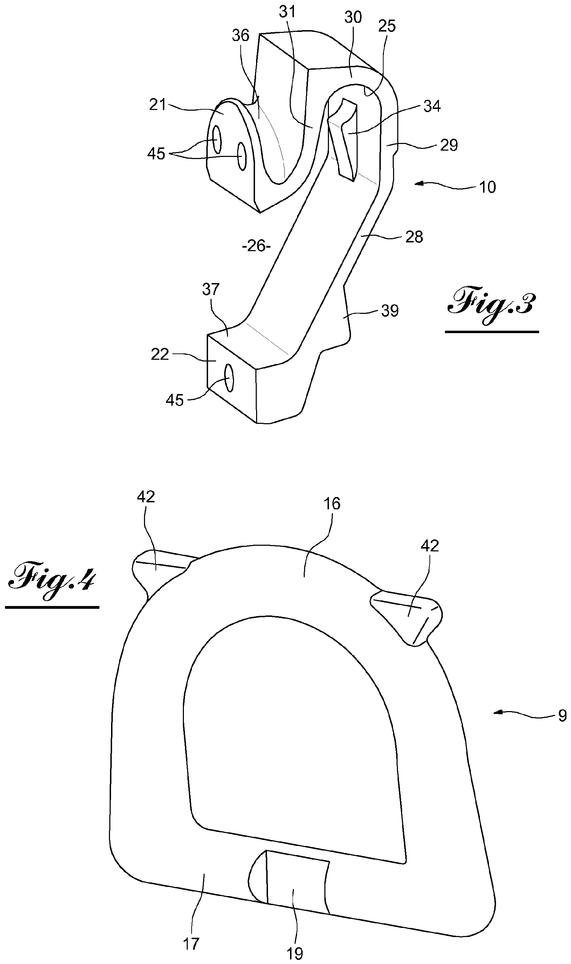

Comme le montrent notamment la figure 4, l'anneau d'arrimage comprend une partie d'étrier arrondie 16 d'accrochage du moyen d'arrimage et une base rectiligne 17 qui relie les deux extrémités de l'étrier. La base est de forme cylindrique et comprend dans sa zone centrale une partie de méplat 19. Le support de cet anneau, comme on le voit notamment sur la figure 3, est constitué d'une chape en forme d'une bande dont les extrémités sont configurées en pattes de fixation 21, 22 sur une surface 24 de la structure porteuse, qui s'étend perpendiculairement au plancher de chargement, l'une 21 au-dessus de l'autre 22 à une distance prédéterminée. La partie supérieure de la bande de chape, qui est adjacente au plancher de chargement est recourbée dans l'exemple représenté d'un angle de 180 degrés en formant en haut un logement semi-cylindrique 25 dans lequel la base cylindrique de l'anneau peut s'engager pour permettre le pivotement de l'anneau dans sa position d'arrimage telle que représentée à la figure 1. La chape définit avec sa surface de fixation, en-dessous du logement 25, un espace 26 permettant le déplacement de l'anneau de sa position sortie d'arrimage dans sa position escamotée de repos, c'est-à-dire retirée dans le support et le châssis, conformément à la figure 2. Plus précisément, la chape comprend une partie inclinée 28 qui se termine en bas par la patte de fixation 22 et qui se prolonge en haut par une partie verticale 29 dont la portion d'extrémité est recourbée tout d'abord en 30 d'un angle de 90 degrés et ensuite encore une fois d'un angle de 90 degrés pour former une partie verticale descendante 31 qui se termine par la patte de fixation 21. Cette patte s'étend perpendiculairement à la partie verticale 31. Le logement semi-cylindrique 25 est formé par les surfaces internes des portions recourbées 30 et 31. Les termes "chape en forme d'un bande" ne signifie pas forcément que la chape est réalisée par pliage d'une bande, mais qu'il s'agit d'une pièce comportant une succession des parties indiquées. Cette pièce peut être faite de toute manière appropriée par exemple par moulage, et en tout matériau approprié.

Selon une caractéristique particulière de l'invention, la partie de chape verticale 29 est pourvue d'un bossage 34 qui fait saillie en direction de la partie recourbée en regard 31. La surface supérieure du bossage est en forme d'un arc de cercle ayant le même rayon de courbure que le logement 25 en continuant la courbure de celui-ci. Ce bossage est situé, par rapport à la largeur de la chape, dans la partie centrale de la partie de chape 29 au niveau du méplat dans la base cylindrique de l'anneau. Le bossage rétrécit ainsi le passage 35 entre le logement cylindrique 25 et l'espace 26 en-dessous de ce logement, de façon que ce passage n'est que légèrement supérieur à l'épaisseur de la base de l'anneau au niveau du méplat, c'est-à-dire à l'épaisseur de la base perpendiculairement à ce dernier. Ainsi, la base peut sortir du logement 25 seulement lorsqu'il se trouve dans une position angulaire dans laquelle le méplat se situe juste au-dessus du passage, comme cela sera expliqué plus loin.

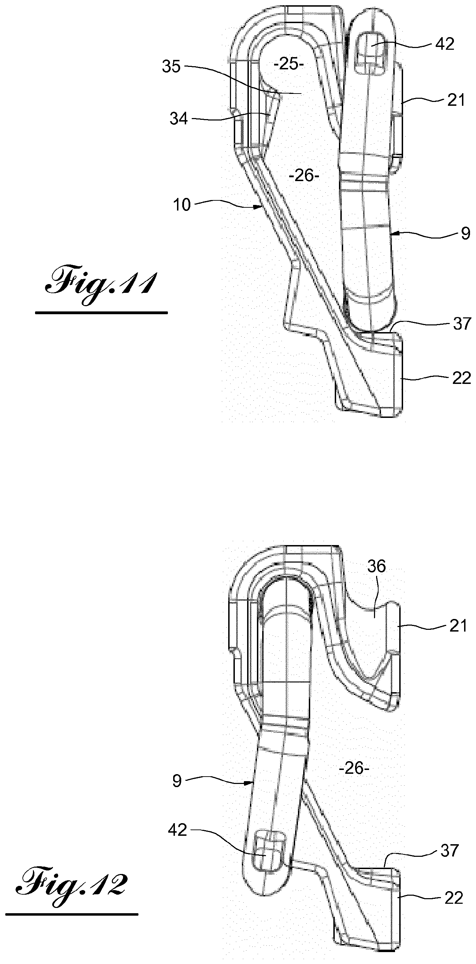

Les figures montrent encore que la surface extérieure de la patte de fixation supérieure 21 est en forme d'une gorge qui est courbée dans un plan parallèle à la surface de fixation du châssis, d'une part et dont le fond est également courbé, de façon complémentaire au diamètre de la courbure de l'étrier et au diamètre de l'étrier, de façon que l'étrier puisse se loger dans cette gorge dans sa position rétractée. Dans cette position, la base de l'anneau est en appui sur une surface d'appui 37 de la patte de fixation inférieure 22. Il est encore à noter que la partie de chape inclinée 28 présente en bas, au-dessus de sa patte de fixation 22 un bossage extérieur 39 sur laquelle peut prendre appui la partie haute de l'étrier dans la position rétractée de la figure 12. Concernant l'étrier, on constate que celui-ci présente, de part et d'autre de la ligne médiane perpendiculaire à la base, au niveau du sommet de l'étrier, des excroissances 42 qui facilitent la saisie de l'anneau d'arrimage.

Concernant la fixation du support sur la face des fixations de la structure porteuse, celle-ci peut être fait par des vis, à savoir, par trois vis, dont les trous de passages sont indiqués en 45. Cette fixation peut aussi être réalisée par soudage.

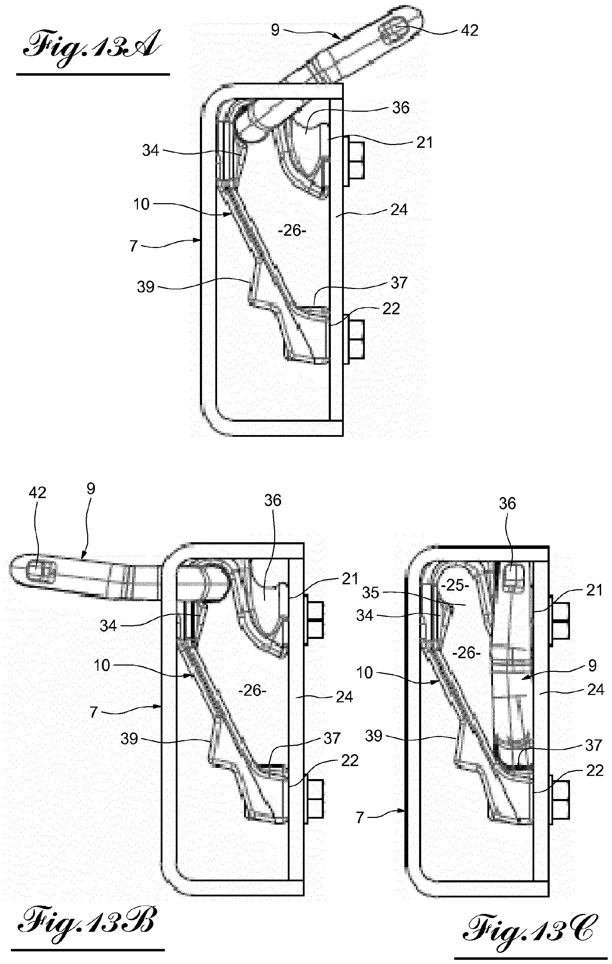

En se référant aux figures 13A à 13C, on explique ci-après brièvement la cinématique du déplacement de l'anneau d'agencement d'arrimage selon l'invention dans son support. La figure 13A montre l'anneau d'arrimage 9 dans sa position d'arrimage, dans laquelle la base est engagée dans le logement 25. Dans cette position, l'anneau s'étend vers l'extérieur à travers une découpe 50 dans le châssis 7 et prend appui en 51 sur le bord de cette découpe en étant incliné d'un angle de par exemple 30 degrés. Etant donné que l'anneau est en appui, l'opérateur qui doit accrocher le moyen d'arrimage au sommet de l'anneau, n'a plus besoin de tenir celui-ci.

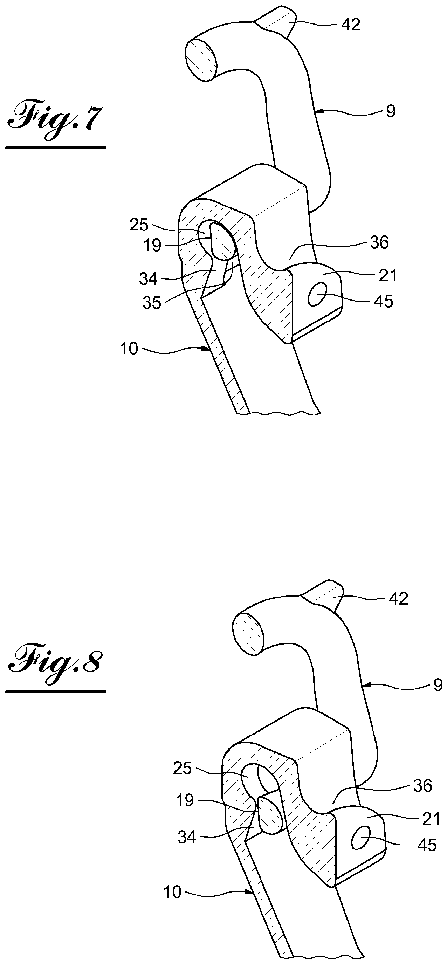

La figure 13B montre l'anneau dans une autre position sortie dans laquelle il prend appui sur le bord horizontal extérieur 32 de la découpe 50. Le déplacement de l'anneau entre ces deux positions se fait par pivotement de l'anneau et par rotation de la base dans son logement 25. Ce n'est qu'en élevant l'anneau verticalement, dans la position représentée à la figure 7 où le méplat 19 se trouve pratiquement perpendiculairement à la surface de sortie de logement, c'est-à-dire le passage, et en exerçant une légère rotation, on peut faire passer la portion à méplat de l'anneau dans le rétrécissement produit par le bossage et à travers celui-ci dans l'espace 26 en-dessous, comme le montre la figure 8. Après le passage de la base d'anneau dans l'espace plus large d'en-dessous, l'anneau peut être amené par pivotement dans sa position illustrée à la figure 13 et dans sa position de la figure 11 dans laquelle la partie arrondie de l'anneau repose dans la gorge 36 sur la patte de fixation supérieure 21, tandis que sa base est en appui sur la surface d'appui 37 de la patte de fixation inférieure 22. Il est à souligner que dans cette position les formes de l'anneau et du support coopèrent afin d'assurer un rangement sans jeu de l'anneau, ce qui permet de supprimer la pollution sonore au roulage du véhicule.

La figure 14 montre le montage du support de l'agencement d'arrimage sur un longeron en forme d'IPN. Comme l'illustrent les figures, le support est fixé soit par vis, soit par soudage sur la lame du profilé.

Bien entendu, de multiples modifications peuvent être apportées à l'agencement d'arrimage tel que décrit et représenté sur les figures. Ainsi, le support de l'anneau d'arrimage peut avoir tout autre forme appropriée, à condition de conserver le logement de la base de l'anneau, de forme cylindrique sur au moins la grande partie de sa périphérie, et une partie en forme d'un méplat, et le passage de largeur rétrécie mais légèrement supérieure à l'épaisseur de la base, perpendiculairement au méplat, de façon à permettre le passage de la base de son logement vers l'espace de déplacement situé en-dessous, seulement en fonction de la position angulaire de la base par rapport au passage. De plus, la gorge de réception de la partie arrondie de l'étrier de l'anneau et la surface d'appui de la base, configurée de façon à assurer une position escamotée de l'anneau sans jeu peuvent être réalisées d'une manière appropriée différente.

## Revendications

1. Agencement d'arrimage d'objets sur une surface, notamment d'un plancher de chargement (5) d'un véhicule de transport de cargaisons, du type comprenant un anneau (9) d'arrimage et d'accrochage d'un moyen d'arrimage (14) tels qu'une sangle ou d'une chaîne, et un support (10) en forme d'une chape destinée à être fixée sur une structure porteuse (7) et dans laquelle l'anneau est déplaçable entre au moins une position d'arrimage et une position de repos, l'anneau comprenant une base rectiligne cylindrique engagée dans un logement de forme complémentaire du support, permettant le pivotement de l'anneau dans ladite position d'arrimage, par rotation de la base dans le logement, **caractérisé en ce que** la base cylindrique de l'anneau d'arrimage (9) comporte une partie centrale à méplat (19) et **en ce que** le support d'anneau d'arrimage (10) comprend dans son extrémité adjacente à la surface de plancher de chargement (5) un logement (25) pour la base (17) permettant la rotation de celle-ci dans ce logement, et en dessous du logement, un espace (26) de déplacement de la base (17) et permettant le déplacement de l'anneau dans une position escamotée de rangement, et **en ce que** le logement (25) est séparé de l'espace de déplacement (26) par une zone rétrécie de passage (35) de la base vers l'espace (26), dont la largeur est légèrement supérieure à l'épaisseur de la base au niveau de la partie à méplat (19), perpendiculairement au méplat, afin de permettre le passage de la base (17) du logement (25) vers l'espace de déplacement (26) seulement lorsque la base se trouve dans une position dans laquelle le méplat est orienté perpendiculairement au passage.

2. Agencement d'arrimage selon la revendication 1, **caractérisé en ce que** le support (10) de l'anneau d'arrimage comporte dans la face extérieure de son extrémité supérieure une gorge (36) de logement du sommet d'accrochage (16) de l'anneau et au niveau de son extrémité inférieure, une surface d'appui (37) sur laquelle la base (17) prend appui sans jeu lorsque l'anneau est dans sa position escamotée.

3. Agencement d'arrimage selon les revendications 1 à 2, **caractérisé en ce que** l'anneau d'arrimage s'étend, dans sa position d'arrimage, au-delà de la surface de plancher de chargement (5), à travers une découpe (50) dans la structure porteuse, selon un angle prédéterminé par rapport à la surface de plancher (5) et **en ce que** l'anneau est maintenu dans cette position par un moyen d'appui (51).

4. Agencement d'arrimage selon l'une des revendications 1 à 3, **caractérisé en ce que** le support (10) de l'anneau d'arrimage (9) est susceptible d'être fixé sur une surface de fixation (24) par des vis ou par soudage.

5. Agencement d'arrimage selon l'une des revendications 1 à 4, **caractérisé en ce que** le support (10) de l'anneau d'arrimage (9) est constitué d'une chape en forme d'une bande dont les extrémités se terminent chacune par une patte de fixation (21 ou 22) à une surface (24) de la structure porteuse, qui est perpendiculaire à la surface de plancher (5), la partie d'extrémité supérieure adjacente à la surface de plancher (5) étant recourbée vers ladite surface de fixation en formant au sommet le logement semi-cylindrique (25) de la base cylindrique (17) de l'anneau (9), tandis que la bande de chape forme, en-dessous du logement, l'espace de déplacement (26) de la base (9) qui est séparée du logement (25) par le passage rétréci par la partie à méplat (19).

6. Agencement d'arrimage selon la revendication 5, **caractérisé en ce que** le support (9) de l'anneau d'arrimage (10) en forme d'une chape comprend une partie médiane inclinée (28) par rapport à la surface de fixation (24), qui se termine en bas par la patte de fixation inférieure (22) et qui se prolonge en haut par une partie verticale (29) dont la portion d'extrémités (30, 31) est recourbée d'un angle de 180 degrés et porte à son extrémité la patte de fixation supérieure (21) qui s'étend perpendiculairement à cette extrémité et à la surface de fixation (24) et présente sur sa surface extérieure la gorge de réception du sommet de l'anneau d'arrimage.

## Patentansprüche

1. Festzurr-Anordnung für Gegenstände auf einer Oberfläche, insbesondere auf einem Ladeboden (5) eines Transportfahrzeugs für Fracht, des Typs, umfassend einen Festzurr- und Befestigungsring (9) eines Festzurrmittels (14) wie ein Gurt oder eine Kette, und einen Halter (10) in Form einer Abdeckung, die bestimmt ist, auf einer tragenden Struktur (7) befestigt zu sein und in welcher der Ring zwischen mindestens einer Festzurrposition und einer Ruheposition verlagerbar ist, wobei der Ring eine zylindrische gerade Basis umfasst, die in eine Aufnahme komplementärer Form zum Halter eingesetzt ist, welche das Schwenken des Rings in die Festzurrposition durch Rotation der Basis in der Aufnahme erlaubt, **dadurch gekennzeichnet, dass** die zylindrische Basis des Festzurrrings (9) einen zentralen Abschnitt mit Abflachung (19) aufweist und dass der Festzurrringhalter (10) in seinem Ende, das der Oberfläche des Ladebodens (5) benachbart ist, eine Aufnahme (25) für die Basis (17) umfasst, welche die Rotation derselben in dieser Aufnahme erlaubt, und unterhalb der Aufnahme einen Verlagerungsbereich (26) der Basis (17) und welche die Verlagerung des Rings in eine versenkte Verstauposition erlaubt, und dass die Aufnahme (25) vom Verlagerungsbereich (26) durch eine verengte Durchgangszone (35) der Basis zum Bereich (26) getrennt ist, die etwas breiter als die Basis im Abflachungsabschnitt (19) ist, senkrecht zu der Abflachung, um den Durchgang der Basis (17) von der Aufnahme (25) zum Verlagerungsbereich (26) nur dann zu erlauben, wenn sich die Basis in einer Position befindet, in welcher die Abflachung senkrecht zum Durchgang ausgerichtet ist.

2. Festzurr-Anordnung nach Anspruch 1, **dadurch gekennzeichnet, dass** der Halter (10) des Festzurrrings in der Außenfläche seines oberen Endes eine Aufnahmenut (36) der Befestigungsspitze (16) des Rings und im Bereich seines unteren Endes eine Abstützoberfläche (37), auf welcher sich die Basis (17) ohne Spiel abstützt, wenn der Ring in seiner versenkten Position ist, aufweist.

3. Festzurr-Anordnung nach den Ansprüchen 1 bis 2, **dadurch gekennzeichnet, dass** sich der Festzurrring, in seiner Festzurrposition, jenseits der Oberfläche eines Ladebodens (5) erstreckt, durch einen Ausschnitt (50) in der tragenden Struktur, gemäß einem in Bezug auf die Oberfläche des Ladebodens (5) vorher festgelegten Winkel, und dass der Ring in dieser Position von einem Abstützmittel (51) gehalten wird.

4. Festzurr-Anordnung nach einem der Ansprüche 1 bis 3, **dadurch gekennzeichnet, dass** der Halter (10) des Festzurrrings (9) an einer Befestigungsoberfläche (24) durch Schrauben oder durch Schweißen befestigbar ist.

5. Festzurr-Anordnung nach einem der Ansprüche 1 bis 4, **dadurch gekennzeichnet, dass** der Halter (10) des Festzurrrings (9) aus einer Abdeckung in Form eines Bands besteht, dessen Enden jeweils in einem Befestigungsfuß (21 oder 22) an einer Oberfläche (24) der tragenden Struktur enden, die senkrecht zur Oberfläche des Bodens (5) ist, wobei der obere Endteil in Nachbarschaft zu der Oberfläche des Bodens (5) zu der Befestigungsoberfläche gekrümmt ist, indem er an der Spitze die halbzylindrische Aufnahme (25) der zylindrischen Basis (17) des Rings (9) bildet, wohingegen das Abdeckungsband unterhalb der Aufnahme den Verlagerungsbereich (26) der Basis (9) bildet, der von der Aufnahme (25) durch den vom Abflachungsabschnitt (19) verengten Durchgang getrennt ist.

6. Festzurr-Anordnung nach Anspruch 5, **dadurch gekennzeichnet, dass** der Halter (9) des Festzurrrings (10) in Form einer Abdeckung einen in Bezug auf die Befestigungsoberfläche (24) mittleren geneigten Abschnitt (28) umfasst, der unten mit dem unteren Befestigungsfuß (22) endet und der sich oben mit einem vertikalen Abschnitt (29) verlängert, dessen Endabschnitt (30, 31) in einem Winkel von 180 Grad gekrümmt ist und an seinem Ende den oberen Befestigungsfuß (21) trägt, der sich senkrecht zu diesem Ende und zu der Befestigungsoberfläche (24) erstreckt und auf seiner äußeren Oberfläche die Aufnahmenut der Spitze des Festzurrrings aufweist.

## Claims

1. An arrangement for securing objects on a surface, in particular a loading floor (5) of a cargo transport vehicle, of the type comprising a ring (9) for securing and detaching a securing means (14) such as a strap or chain, and a support (10) in the form of a yoke intended to be fastened on a support structure (7) and in which the ring is movable between at least a securing position and an idle position, the ring comprising a cylindrical rectilinear base engaged in a housing with a shape complementary to the support, allowing the ring to pivot in said securing position, by rotating the base in the housing, **characterized in that** the cylindrical base of the securing ring (9) comprises a central flat part (19) and **in that** the support of the securing ring (10) comprises, in its end adjacent to the loading floor surface (5), a housing (25) for the base (17) allowing the latter to rotate in this housing, and below the housing, a space (26) for movement of the base (17) and allowing the movement of the ring in a retracted storage position, and **in that** the housing (25) is separated from the movement space (26) by a narrow passage zone (35) of the base toward the space (26), the width of which is slightly greater than the thickness of the base at the flat part (19), perpendicular to the flat, in order to allow the passage of the base (17) from the housing (25) toward the movement space (26) only when the base is found in a position in which the flat is oriented perpendicular to the passage.

2. The securing arrangement according to claim 1, **characterized in that** the support (10) of the securing ring includes, in the outer face of its upper end, a housing groove (36) of the fastening apex (16) of the ring, and at its lower end, a bearing surface (37) on which the base (17) bears without play when the ring is in its retracted position.

3. The securing arrangement according to claims 1 to 2, **characterized in that** the securing ring extends, in its securing position, past the loading floor surface (5), through a cutout (50) in the support structure, by a predetermined angle relative to the floor surface (5) and **in that** the ring is kept in this position by a bearing means (51).

4. The securing arrangement according to one of claims 1 to 3, **characterized in that** the support (10) of the securing ring (9) is able to be fastened on a fastening surface (24) by screws or by welding.

5. The securing arrangement according to one of claims 1 to 4, **characterized in that** the support (10) of the securing ring (9) is made up of a yoke in the form of a strip whereof the ends each terminate in a fastening tab (21 or 22) at a surface (24) of the support structure, which is perpendicular to the floor surface (5), the upper end part adjacent to the floor surface (5) being curved toward said fastening surface while forming, at the apex, the semi-cylindrical housing (25) of the cylindrical base (17) of the ring (9), while the yoke strip forms, below the housing, the movement space (26) of the base (9) that is separated from the housing (25) by the narrow passage by the flat part (19).

6. The securing arrangement according to claim 5, **characterized in that** the support (9) of the securing ring (10) in the form of a yoke comprises an inclined median part (28) relative to the fastening surface (24), which terminates at the bottom by the lower fastening tab (22) and which extends at the top by a vertical part (29) whereof the end portion (30, 31) is curved by an angle of 180 degrees and bears, at its end, the upper fastening tab (21) that extends perpendicular to this end and to the fastening surface (24) and has, on its outer surface, the groove for receiving the apex of the securing ring.
